# EUROPEAN PATENT APPLICATION

(11) **EP 3 113 505 A1**
(43) Date of publication of application: **04.01.2017**
(21) Application number: 15306061.1
(22) Date of filing: 30.06.2015
(51) Int. Cl.: H04R 1/10, H04R 1/32, H04R 1/40, H04R 3/00, H04R 25/00, H04S 7/00, G02B 27/01, G10L 19/018

(54) **A HEAD MOUNTED AUDIO ACQUISITION MODULE**

(71) Applicant: ESSILOR INTERNATIONAL (COMPAGNIE GENERALE D'OPTIQUE), 94220 Charenton-le-Pont (FR)
(72) Inventor: ROUSSEAU, Denis, 94227 CHARENTON-LE-PONT CEDEX (FR); LORE, Marie, 94227 CHARENTON-LE-PONT CEDEX (FR); SAHLER, Jean, 94227 CHARENTON-LE-PONT CEDEX (FR); GIL, Paul, 94227 CHARENTON-LE-PONT CEDEX (FR); BROUTIN, Guillaume, 94227 CHARENTON-LE-PONT CEDEX (FR)
(74) Representative: Cabinet Novitech

(57) **Abstract**

A head mounted device comprising:
- a frame to be worn on a wearer's head,
- at least one camera mounted on the frame and arranged to acquire images of the environment around the wearer when the frame is worn by the wearer,
- a audio source identification module arranged to identify at least one audio source in the environment around the wearer from the acquired images of the environment around the wearer,
- at least one audio acquisition module configured to acquire an audio signal corresponding to an audio source identified by the audio source identification module.

## Description

### FIELD OF THE INVENTION

The invention relates to a head mounted device comprising a frame to be worn on a wearer's head, at least one camera, an audio source identification module and at least one audio acquisition module. The invention also refers to a head mounted device comprising a frame to be worn on a wearer's head, at least one head movement determination module and at least one audio acquisition module.

The invention further refers to a method for determining a sound amplification direction using a head mounted device according to the invention and to a computer program product comprising one or more stored sequences of instructions that are accessible to a processor and which, when executed by the processor, causes the processor to carry out the steps of the method according to the invention.

### BACKGROUND OF THE INVENTION

Usually, when a person has difficulty hearing, this person goes to the premise of a physician to carry out hearing tests so as to provide a hearing aid device.

Typically, the hearing aid or deaf aid devices are electroacoustic devices which are designed to amplify sound for the wearer, usually with the aim of making speech more intelligible, and to correct impaired hearing as measured by audiometry.

Such hearing aid device although efficient, usually is not adapted to the audio environment of the user. Typically, such devices are not very efficient in a noisy environment when the user is talking to person. Indeed, such device usually amplifies the sounds received regardless of whether such sounds are provided from the person the user is talking to or from third parties. In other words such devices usually have a multidirectional amplification of the sounds.

Therefore, there is a need for an adapted device that could adapt the amplification to a direction of interest for the user.

One object of the present invention is to provide such an adapted device.

### SUMMARY OF THE INVENTION

To this end, the invention proposes a head mounted device comprising:
- a frame to be worn on a wearer's head,
- at least one camera mounted on the frame and arranged to acquire images of the environment around the wearer when the frame is worn by the wearer,
- an audio source identification module arranged to identify at least one audio source in the environment around the wearer from the acquired images of the environment around the wearer,
- at least one audio acquisition module configured to acquire an audio signal corresponding to an audio source identified by the audio source identification module.

Advantageously, using the camera mounted on the frame, the device according to the invention may identify a specific audio source in the wearer's environment and the audio acquisition module can be adapted to acquire audio signal from such identified specific audio source.

By directing the acquired signal the device according to the invention may amplify a specific audio signal even in a noisy environment.

According to further embodiments which can be considered alone or in combination:
- the head mounted device further comprises an output device, such as speaker, a cochlear implant, a recording device; and/or
- the at least one audio acquisition module is mounted on the frame; and/or
- the head mounted device further comprises an audio source direction determining device arranged to determine an audio source direction corresponding to the direction of the identified audio source relative to the wearer; and/or
- the audio acquisition module is configured to acquire an audio signal in the audio source direction; and/or
- the at least one audio acquisition module comprises at least a microphone more sensitive in a selected direction than in at least one other direction, and the microphone alters the selected direction based at least on the determined audio source direction; and/or
- the at least one audio source comprises a person speaking in the environment around the wearer; and/or
- the at least one audio source comprises an audio device emitting sound in the environment around the wearer; and/or
- the at least one audio acquisition module is configured to receive audio data associated with the identified at least one audio source; and/or
- the audio source identification module is arranged to identify a visual tag on the audio source.

The invention further relates to a head mounted device comprising:
- a frame to be worn on a wearer's head,
- at least one head movement determination module mounted on the frame and arranged to determine head movements of the wearer,
- at least one audio acquisition module configured to acquire an audio signal, the audio acquisition module being more sensitive in a selected distance that at least one other distance, and the audio acquisition module alters the selected distance based at least on the head movement determined by the head movement determination module.

Advantageously, based on the orientation of the head of the wearer the head mounted device of the invention allows identifying the distance at which the wearer wishes to hear. For example, in a train station, the wearer may wish to have the device amplify the announcements rather than the sounds, such as conversations, around him. To have the audio acquisition module amplify preferably the announcement, the wearer may move his head up. Such movement can be identified as an indication that the audio acquisition module selects far distance sensitivity rather that close distance sensitivity.

The head movement determination module of the head mounted device of the invention may further comprise at least an accelerometer and/or a gyroscope configured to sense the movement and/or orientation of the head mounted device.

The invention also relates to a method for determining a sound amplification direction using a head mounted device according to the invention. The method comprises:
- a wearer environment acquisition step, during which images of the environment of the wearer are acquired,
- an audio source identification step, during which an audio source is identified in the environment of the wearer based on the images of the environment acquired during the wearer environment acquisition step,
- an audio acquisition step, during which an audio signal corresponding to the identified audio source is acquired.

According to further embodiments which can be considered alone or in combination:
- the audio acquisition step comprises acquiring an audio signal using at least one microphone; and/or
- the audio acquisition step comprises receiving an signal associated to the identified audio source and converting such signal into an audio signal; and/or
- the method further comprises an output step during which the audio signal acquired during the audio acquisition step is output to the wearer of the head mounted device.

The invention further relates to a computer program product comprising one or more stored sequences of instructions that are accessible to a processor and which, when executed by the processor, causes the processor to carry out the steps of the methods according to the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. These apparatuses may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general purpose systems may be used with programs in accordance with the teachings herein, or it may prove convenient to construct a more specialized apparatus to perform the desired method.

The desired structure for a variety of these systems will appear from the description below. In addition, embodiments of the present invention are not described with reference to any particular programming language. It will be appreciated that a variety of programming languages may be used to implement the teachings of the inventions as described herein.

### BRIEF DESCRIPTION OF THE DRAWINGS

Embodiments of the invention will now be described, by way of example only, and with reference to the following drawings in which:
- Figure 1 illustrates a head mounted device according to a first embodiment of the invention,
- Figure 2 illustrates a head mounted device according to a second embodiment of the invention, and
- Figure 3 is a chart-flow of an embodiment of the method according to the invention.

### DETAILED DESCRIPTION OF PREFERRED EMBODIMENTS

The invention relates to a head mounted device comprising a frame to be worn on the head of the user of the device.

Typically, the frame may be a spectacle frame, whether or not spectacle lenses are included.

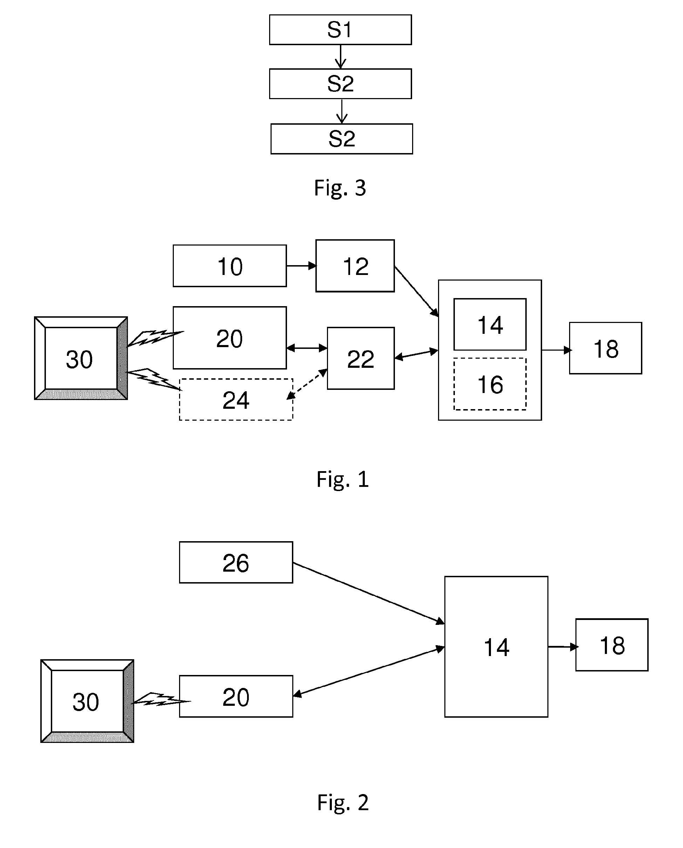

As illustrated on figure 1, the head mounted device comprises at least one camera 10 mounted on the frame and arranged to acquire images of the environment around the wearer when the frame is worn by the wearer.

Typically, the camera is mounted on the front part of the spectacle frame so as to acquire images of the environment directly facing the wearer when wearing the spectacle frame. The head mounted device may further comprise a plurality of cameras so as to acquire images in with a wide field of vision around the user.

For example, the camera or plurality of cameras may be configured to acquire one or more images within the field of vision of the wearer, with an angle of about 120°.

Advantageously, having a wide field of acquisition around the user allows acquiring images of audio sources that may not be directly facing the user.

According to an embodiment, it may be useful to have at least two cameras, one for the right side of the wearer and one for the left side of the user so as to facilitate the determination of the 3 dimensional position of the audio source in the environment of the wearer.

The camera may be of any type known by the skilled person, such as CCD or CMOS camera.

The camera is linked to an image features extracting module 12 that can process the images provided by the camera to extract features that may be used by an audio source identification module 14 to identify at least one audio source.

The audio source identification module 14 is arranged to identify at least one audio source in the environment around the wearer from the acquired images of the environment around the wearer provided by the image features extracting module 12.

For example, the audio source identification module 14 may comprise a data base and/or a lookup table of specific features of audio sources and a processor allowing identifying audio sources in the environment of the wearer based on the images acquired by the camera.

The audio source 30 that may be identified by the audio source identification module 14 may be a person speaking in the environment around the wearer.

For example, by processing the images provided by the camera, the audio source identification module 14 may identify a person speaking and addressing to the wearer.

The audio source 30 may comprise an audio device emitting sound in the environment of the wearer. For example, the audio source may be a television, a radio, a speaker or any of type of sound emitting device.

By processing the images provided by the camera, the audio source identification module can identify the different audio sources and if such audio sources are active. For example, the by processing the image of a TV in the environment of the wearer, the audio source identification module can determine if a TV in on in the environment of the wearer and if so identify such TV as an audio source.

As illustrated on figure 1, the head mounted device may further comprise an audio source direction determining module 16 arranged to determine an audio source direction corresponding to the direction of the identified audio source relative to the wearer.

Such audio source direction determining module 16 may use for example the fact that a plurality of camera is used to acquire images of the environment of the wearer. Based on which camera(s) of the plurality of camera has (have) acquired images of the audio source the audio source direction determining module 16 may determine the direction of the audio source.

The head mounted device further comprises an audio acquisition module 20 configured to acquire an audio signal corresponding to an audio source identified by the audio source identification module 14. The audio acquisition module 20 is connected to a sound processing module 22 that is configured to process the signal provided by the audio acquisition module 20.

According to an embodiment of the invention, the audio acquisition module may be mounted on the head mounted frame.

In a preferred embodiment, the sound processing unit is connected to an output device 18 arranged to output a signal corresponding to the sound acquired by the audio acquisition module. Merely by way of example, the output device may be a speaker, a cochlear implant or a recording device or any device that converts an electrical signal to sounds.

The audio acquisition module 20 may comprise a microphone. The microphone may be any device that converts sounds into an electrical signal.

In some embodiments, the microphone may include a plurality of microphones which are oriented in different directions. For example, as indicated in figure 1, the head mounted device may comprise a right 20 and left microphone 24 oriented so as to acquire stereo signals.

In some embodiments, one or more of the microphones may be unidirectional microphone which is more sensitive in one direction that other direction. Typically, the microphones may be adapted to acquire an audio signal in the audio source direction identified by the audio source direction determining module.

For example, during a dinner, one can select the interlocutor with head position, in front or side depending of the head direction. Detection of movement like turning the head can also help the system to select another audio source. Face detection by a camera can help to accurately select the sound source with the right combination of microphones. This corresponds to a near communication mode.

For example, when the head is facing a TV set or equipment that produces sound, this sound source is selected. If the head turns the source is deselected to allow normal conversation with other people in the room. If a human face is detected by the camera the source direction can be also be adjusted. This corresponds to an intermediate communication mode.

The audio acquisition module may be by a digital acquisition module adapted to acquire sound signal from a digital audio source.

For example, the camera 10 is integrated into the frame, and the image processing system 12 can detect a selected digital sound source, by shape recognition, or by a special tag like bar code.

A sound signal associated with the detected selected digital sound source can be transmitted by any wireless signal transmission channel, like Bluetooth or any other source like Zigbee or WiFi internet broadcast or other digital network. This mode can be mixed with the preceding one, allowing selection of digital source or natural sound acquired by the microphones.

In addition to the camera, the head mounted device may use audio watermarking embedded into the audio source, like a TV audio channel. It is possible to transmit a bluetooth channel number in the audio stream in a non audible way, and so the microphones can detect automatically some digital source, that can be Bluetooth, or any other source like Zigbee or WiFi internet broadcast.

When detected, the microphone can continue to check that the digital channel is still transmitted at regular intervals, and the processor switches the sound source to the digital source detected, which has a much better quality than the sound transmitted by the TV loudspeaker. In this case, the digital source is selected only if both side microphones receive similar sound or if the combination of microphones used in the system detect the sound source in front of the wearer, which means the head is turned toward the audio source. When the head turns toward another direction, the digital source can be deselected to allow normal audio processing with the microphones.

For example, when watching TV at home, one can select the Bluetooth channel of the TV, even in another language than the one transmitted by the loudspeakers. For visually impaired people the sound channel can be an audio description. Turning the head in another direction than the TV set turns off progressively the TV wireless sound transmission, and selects the sound coming from the microphones.

In a street, the user watches a street sign that is recognized by the embedded camera (with image processing detecting the text or a bar code). The sign recognition enables the selection of a particular wireless channel that broadcasts some information about the sign. The message can be a short message like the street name, or a more important message if the sign is in a museum. A similar application can be used in a shop when viewing the bar code of a product or a particular visual tag. Transmission can be done from a local server, with appropriate Bluetooth channel, or by internet by selection of a particular audio web page.

Similar technology as for virtual or augmented reality can be used, by detecting from the camera a particular object or tag, that is linked to a data source, which can contain audio information, but also graphics or any data. The sound can be an audio MP3 file, or any coded audio media.

According to an embodiment of the invention, represented on figure 2, the head mounted device may comprise:
- a frame to be worn on a wearer's head,
- at least one head movement determination module 26, and
- at least one audio acquisition module 20.

The head movement determination module 26 is mounted on the frame and is arranged to determine head movements of the wearer. According to an embodiment, the head movement determination module 26 comprises at least an accelerometer and/or a gyroscope configured to sense the movement and/or orientation of the head mounted device.

The audio acquisition module 20 is configured to acquire an audio signal, the audio acquisition module being more sensitive in a selected distance than at least one other distance, and the audio acquisition module alters the selected distance based at least on the head movement determined by the head movement determination module. Typically, the audio acquisition module 20 comprises a microphone, for example a unidirectional microphone.

The audio acquisition module may be of any kind detailed in relation with figure 1.

For example, in a public place like a train station, it is possible to select the sound coming from a far source, like announcement, and reduce the environment noise, to better hear the announcement. This can be done by having the wearer turn his head upward. This corresponds to a far communication mode.

The head mounted device according to the invention may combine both embodiments of figure 1 and 2. In particular, the head mounted device may comprise at least one camera and a head movement determination module so as to increase the accuracy of the determination of an audio source.

The invention further relates to a method for determining a sound amplification direction using a head mounted device according to the invention. As illustrated on figure 3, the method comprises:
- a wearer environment acquisition step S1,
- an audio source identification step S2, and
- an audio acquisition step S3.

During the wearer environment acquisition step S1 images of the environment of the wearer are acquired, typically using a camera.

During the audio source identification step S2, an audio source is identified in the environment of the wearer based on the images of the environment acquired during the wearer environment acquisition step.

An audio signal corresponding to the identified audio source is acquired during the audio acquisition step S3.

According to an embodiment of the invention, the audio acquisition step comprises acquiring an audio signal using at least one microphone.

According to an embodiment of the invention, the audio acquisition step comprises receiving a signal associated to the identified audio source and converting such signal into an audio signal.

The method of the invention may further comprise an output step during which the audio signal acquired during the audio acquisition step is output to the wearer of the head mounted device.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A head mounted device comprising:
- a frame to be worn on a wearer's head,
- at least one camera mounted on the frame and arranged to acquire images of the environment around the wearer when the frame is worn by the wearer,
- a audio source identification module arranged to identify at least one audio source in the environment around the wearer from the acquired images of the environment around the wearer,
- at least one audio acquisition module configured to acquire an audio signal corresponding to an audio source identified by the audio source identification module.

2. The head mounted device according to claim 1, wherein the head mounted device further comprises an output device.

3. The head mounted device according to claim 1 or 2, wherein the at least one audio acquisition module is mounted on the frame.

4. The head mounted device according to any of the preceding claims, wherein the head mounted device further comprises an audio source direction determining device arranged to determine an audio source direction corresponding to the direction of the identified audio source relative to the wearer.

5. The head mounted device according to claim 4, wherein the audio acquisition module is configured to acquire an audio signal in the audio source direction.

6. The head mounted device according to claim 4 or 5, wherein the at least one audio acquisition module comprises at least a microphone more sensitive in a selected direction than in at least one other direction, and the microphone alters the selected direction based at least on the determined audio source direction.

7. The head mounted device according to any of claims 4 to 6, wherein the at least one audio source comprises a person speaking in the environment around the wearer.

8. The head mounted device according to any of claims 4 to 7, wherein the at least one audio source comprises an audio device emitting sound in the environment around the wearer.

9. The head mounted device according to any of the preceding claims, wherein the at least one audio acquisition module is configured to receive audio data associated with the identified at least one audio source.

10. The head mounted device according to any of the preceding claims, wherein the audio source identification module is arranged to identify a visual tag on the audio source.

11. A head mounted device comprising:
- a frame to be worn on a wearer's head,
- at least one head movement determination module mounted on the frame and arranged to determine head movements of the wearer,
- at least one audio acquisition module configured to acquire an audio signal, the audio acquisition module being more sensitive in a selected distance that at least one other distance, and the audio acquisition module alters the selected distance based at least on the head movement determined by the head movement determination module.

12. The head mounted device according to claim 11, wherein the head movement determination module comprises at least an accelerometer and/or a gyroscope configured to sense the movement and/or orientation of the head mounted device.

13. A method for determining a sound amplification direction using a head mounted device according to any of claims 1 to 10, the method comprising:
- a wearer environment acquisition step during which images of the environment of the wearer are acquired,
- an audio source identification step during which an audio source is identified in the environment of the wearer based on the images of the environment acquired during the wearer environment acquisition step,
- an audio acquisition step during which an audio signal corresponding to the identified audio source is acquired.

14. The method according to claim 13, wherein the audio acquisition step comprises acquiring an audio signal using at least one microphone.

15. The method according to claim 13, wherein the audio acquisition step comprises receiving an signal associated to the identified audio source and converting such signal into an audio signal.

16. The method according to any of claims 13 to 15, wherein the method further comprises an output step during which the audio signal acquired during the audio acquisition step is output to the wearer of the head mounted device.
